# EUROPEAN PATENT APPLICATION

(11) **EP 0 826 614 A2**
(43) Date of publication of application: **04.03.1998**
(21) Application number: 97830382.4
(22) Date of filing: 23.07.1997
(51) Int. Cl.: B65G 47/51

(54) **Conveyor system for baked products, particularly biscuits and the like**

(30) Priority: 29.07.1996 IT TO960658
(71) Applicant: Simonetti S.r.l., 10040 S. Gillio, Torino (IT)
(72) Inventor: Bianco, Giorgio, 10040 San Gillio (Torino) (IT); Simonetti, Salvatore, 10040 San Gillio (Torino) (IT); Simonetti, Antonio, 10040 San Gillio (Torino) (IT)
(74) Representative: Buzzi, Franco

(57) **Abstract**

A conveyor system (1) for baked foodstuff products (P), particularly for biscuits and the like, comprising a number of advancement lines (2) feeding rows of products towards a pile and store up area (11) for delivery of the products to respective packaging station. The system includes a reserve or siding line (8) arranged at one side of the advancement lines (2) and a transfer assembly (7) to selectively and temporarily divert the product flow path from any of the advancement lines (2) towards the reserve lines (8).

## Description

The present invention is generally related to conveyor systems for baked foodstuff products, particularly for biscuits and the like.

More particularly, the invention is directed to a conveyor system comprising a number of advancement lines including side-by-side motor-driven endless conveyers, on which the products arranged in a horizontally supported condition are continuously transferred into rows substantially parallel to the advancement direction along respective canalizing elements, towards pile and store up areas for delivery of the products to respective packaging stations.

In conventional conveyor systems of the above-referenced type, by which the entire feeding-grouping-packaging of the products is enabled to be fully automatized, defects may occur along the flow path of the products towards the packaging stations, or even in correspondence of these packaging stations, due to which the product flow along the related advancement line has to be necessarily interrupted or discharged. Should the defect require long resetting times, this evidently involves a remarkable reduction of the production volume and, consequently, huge economical damages.

The object of the present invention is to overcome the above drawback, and more particularly to prevent any interruption of the product flow of any of the advancement lines in case of defects or failure thereof or of the packaging system associated thereto, or along the flow path from the pile and store up area and that packaging station.

According to the invention, this object is achieved by virtue of the fact that a conveyor system of the type set forth in the above is primarily characterized in that it comprises a reserve line consisting of a motor-driven endless conveyer, and transfer means to selectively and temporarily divert the product flow path from any of the advancement lines towards the reserve line.

The reserve line may be constituted by one of the advancement lines themselves, normally kept inoperative and made operative as a siding line with the one of the remaining advancement lines which is subjected to failure, or -according to a preferred embodiment of the invention- this reserve line may be formed by an additional line, arranged at one side of the advancement lines.

Due to this idea of solution the product flow related to the advancement line subjected to failure between the pile and store up area and the related packaging station can immediately be diverted so as to ensure production continuity, thus supplying the products via the reserve line to a further packaging station associated thereto, without interruption and thus in practice without any remarkable reduction of the production volumes.

According to a preferred embodiment of the invention, the transfer means comprise a carriage displaceable in a transverse direction with respect to the advancement lines to be positioned in correspondence of a selected advancement line, a transverse motor-driven conveyer arranged parallely to the displacement direction of the carriage, in proximity thereto, and connecting means between said selected advancement line and said carriage, arranged between said carriage and said transverse conveyer, and between said transverse conveyer and said reserve line, to restore thereon the rows of products transferred from the selected advancement line.

Conveniently the carriage and the transverse conveyer are situated at a different, lower or preferably upper, level with respect to the level of the advancement lines and of the reserve line, upstream of said pile and store up areas. Each advancement line has a respective section which is angularly displaceable between a substantially horizontal position and an inclined position, in which the respective outlet end thereof is located substantially at the same level of the carriage. This carriage can be positioned between the outlet end of said angularly displaceable section and the transverse conveyer, and has canalizing member corresponding to canalizing elements of said angularly displaceable section and to each of which a respective motor-driven endless conveyer is associated. In alternative, the carriage may be provided with a single belt conveyer, which is common to the related canalizing members. The canalizing members of the carriage are conveniently provided, on the side of the transverse conveyer, with curved ends defining progressively offset connecting chutes with said transverse conveyer. Canalizing members corresponding to the canalizing members of the carrier are provided between the outlet end of the transverse conveyer and the reserve line and having, on the side of the reserve line, curved ends defining progressively offset connecting chutes with said reserve line.

By this arrangement, the transverse conveyer does not need any canalizing means, which enables the product front at the outlet of the carriage to travel at a minimum height with respect to the product depositing surface on the transverse conveyer, thus preventing leaps and shocks of the products upon transfer thereof. Moreover the additional advantage of a reduced vertical encumbrance is achieved, since the rows of products deposited onto the transverse conveyer through the chute ends of the carriage canalizing members reach without any disturbances, and in to the same arrangement, the canalizing elements and related connecting chutes provided between the transverse conveyer and the reserve line.

To the aim of preventing any interferences between the products and the transfer carriage upon lifting of the angularly displaceable section of the advancement line subjected to failure, the outlet ends of these angularly displaceable sections of the advancement lines are retractable, and a transverse collecting conveyer is provided beneath these outlet ends.

The invention will now be disclosed in detail with reference to the accompanying drawings, purely provided by way of non limiting example, in which:
- Figure 1 is a top plan, diagrammatic and partial view of a conveyor system according to the invention,
- Figure 2 is a lateral elevation view of figure 1, and
- Figure 3 is a perspective and enlarged view of a part of figure 2.

Referring to the drawings, reference numeral 1 generally designates a part of a conveyor system for baked foodstuff products, particularly for biscuits, rusks and the like, according to the invention.

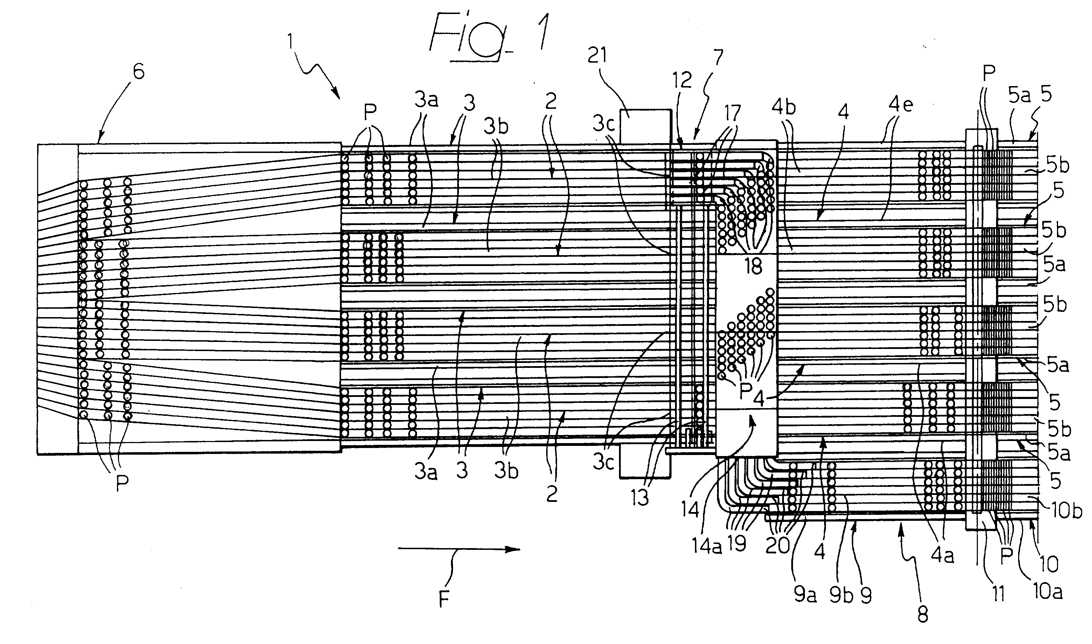

The conveyor system 1 comprises, according to the shown example, four advancement lines 2, arranged substantially horizontally (or even slightly inclined) and side-by-side, each of which is formed by subsequent sections 3, 4, 5 each comprising a motor-driven endless belt conveyer 3a, 4a, 5a and a respective partition unit 3b, 4b, 5b formed by longitudinal baffles defining, along the upper advancement run of the motor-driven endless belt conveyer 3a, 4a, 5a, longitudinal channels. Along these longitudinal channels the products, shown as P, are advanced along rows which are substantially parallel to the advancement direction, indicated as F in figure 1.

Upstream of the sections 3 of the advancement lines 2 a supply line, generally designated as 6, is arranged in a way known per se, from which the products P at the outlet of a baking oven are conveyed and canalized.

A and pile and store up station of a conventional type, generally designated as 11, is provided between the sections 4 and 5 of the advancement lines 2, at which the products P are turned over to a vertical position and grouped together into piles, for delivery thereof to automatic packaging stations, not shown in the drawings since also a conventional type, placed downstream of the sections 5 of the advancement lines 2.

According to the fundamental feature of the invention, between the sections 3 and 4 of the advancement lines 2 a transfer assembly is arranged, generally designated as 7, to which a reserve or siding line 8 is operatively associated, extending parallely and along one side of the sections 4, 5 of the advancement lines 2 to feed the products P, such as clarified herebelow, to a reserve packaging station, also not shown since conventional.

The configuration of the reserve line 8 is almost identical to that of the sections 4 and 5 of the advancement lines 2, with a section 9 and a section 10 arranged upstream and downstream, respectively, of the pile and store up area 11 and both consisting of a motor-driven endless belt conveyer 9a, 10a, continuously or intermittently operated, and by a partition unit 9b, 10b defining channels identical to those of the advancement lines 2.

Referring now in better detail to figures 2 (in which for simplicity of illustration the partition unit 3b, 4b, 5b, 9b and 10b are omitted) and 3, the transfer assembly 7 essentially comprises a motor-driven transfer carriage 12, displaceable in a transverse direction with respect to the advancement lines 2 along slide guides 13 situated at an upper level relative to that of the advancement lines 2, immediately downstream of the outlet ends 3c of the sections 3 thereof, and a motor-driven endless belt transverse conveyer 14 located on one side of the sliding path of the carriage 12, at a slightly lower level.

The transfer carriage 12 can be positioned along the related slide guides 13 at four different positions, in each of which same is aligned with a respective one of the sections 3 of the advancement lines 2. The motor-driven system operating this displacements may comprise for instance an electric geared motor 15 and a chain transmission 16, or any other equivalent system, with an associated control system generally known per se.

The carriage 12 bears superiorly a partition unit formed by a number of canalizing members 17, whose number is corresponding to the canalizing elements 3b of the sections 3 of the advancement lines 2, having a progressively greater length and provided, on the side of the transverse conveyer 14, with curved ends defining progressively offset connecting chutes 18 between these canalizing members 17 and the transfer conveyer 14. Beneath each channel defined by the canalizing members 17, the carriage 12 bears a respective motor-driven endless strip conveyer 24, parallel to the lines 2, the lengths of these motor-driven endless strips 24 corresponding to those of the related canalizing members 17. In alternative, a single motor-driven endless belt may be associated to all of the canalizing members 17, ending in correspondence of the initial portions of the offset chutes 18 so as to enable descent of the products thereonto merely under gravity.

The motor apparatus driving the endless strips 24 is not shown in detail, since within the skill of the technician.

The transverse conveyer 14 is also constituted by a motor-driven endless belt (equipped with a conventional motor apparatus) without longitudinal canalizing elements. At the outlet end of the transverse conveyer 14, indicated as 14a, canalizing members 19 are provided, corresponding to the canalizing members 17, having on the side of the reserve line 8 curved ends defining progressively offset chutes 20 connecting with the canalizing elements 9b of the section 9 of the reserve line 8.

According to another feature of the invention, the outlet ends 3c of the endless conveyers 3a of the sections 3 of the advancement lines 2 are retractable, in a generally conventional fashion, by virtue of motor-driven drawing back of the respective terminal driven rollers 3d, to the reason and in the way which shall be clarified in the following.

Beneath these outlet ends 3c of the section 3 a transverse motor-driven endless collecting belt conveyer 21 is arranged, whose function will also be explained herebelow.

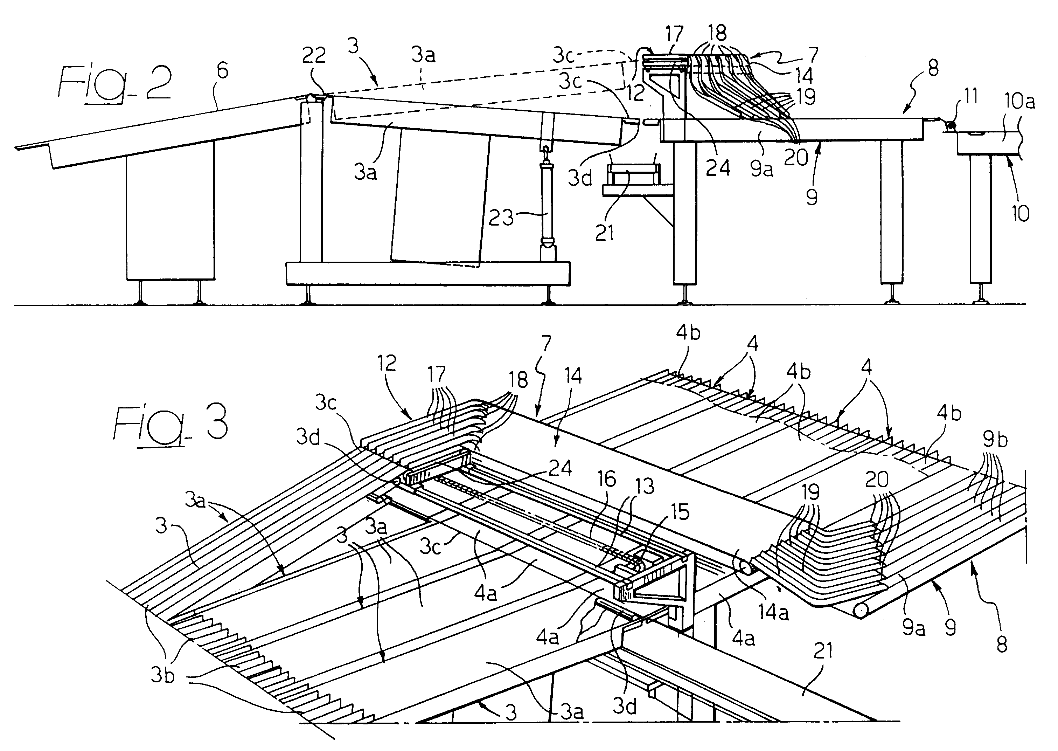

As shown in detail in figure 2, the section 3 of each advancement line 2 is angularly displaceable, around a transverse axis 22 substantially passing through the inlet end thereof, between a horizontal position of normal operation, shown by full line in that figure, for passing along the product P to the respective section 4, and an upwardly inclined position, depicted by dotted lines in figure 2 (and in figure 3 with reference to the section 3 at the left side), in which the respective outlet end 3c is positioned substantially at the same level of the transfer carriage 12. This angular displacement is operated by a motor-driven actuator 23, for instance a fluid pressure actuator.

Operation of the conveyor system 1 according to the invention is as follows.

In normal conditions, the products P fed by the supply line 6 are canalized and advanced along the sections 3 and 4, then piled and stored up at the area 11 and delivered through the sections 5 to the respective packaging stations.

In case of failure of a packaging station associated to one of the advancement lines 2, or in case of jamming or other defects along the related sections 4, or in correspondence of the pile and store up area 11, production continuity along that line is not interrupted (contrary to the case of traditional conveyor systems), but is instead safeguarded by the intervention of the transfer assembly 7 and of the reserve line 8, so as to divert the products towards the reserve packaging station. In such event, an automatic control system (for instance arranged so as to detect any irregular crowding of products along each advancement line 2) operates positioning of the carriage 12 in alignment with the section 3 of the advancement line 2 subjected to misoperation. Simultaneously the outlet end 3c of the conveyer 3a of that section 3 is retracted, by means of motor-driven draw-back of the respective terminal driven roller 3d, and both the lower collecting conveyer 21 and the endless strip conveyers 24 of the carriage 12 are operated.

The transverse conveyer 14 is then operated, and the section 3 is rotated upwardly to the inclined position shown by dotted lines in figure 2 and in figure 3, up to alignment of the canalizing elements 3b thereof with the canalizing members 17 of the carriage 12. During this step a small amount of products which continue to advance along the section 3 may drop under gravity onto the lower collecting conveyer 21, however without any risks of interference with the carriage 12 by virtue of the fact that the outlet end 3c has been retracted.

At the end of the upwardly displacement of the section 3, the outlet end 3c is again advanced, by means of forward displacement of the terminal driven roller 3d, and the products are thus transferred from the section 3 to the carriage 12 and then- advanced by the strip conveyers 24 thereof along the canalizing members 17. The forward displacement speed of the outlet end 3c is higher than the advancement speed of the conveyer 3a, to the aim of avoiding that the products be nipped between the roller 3d and the transfer carriage 12.

Through the inlet chutes 18 the products are thus deposited onto the transverse conveyer 14, in exactly the same parallel row configuration, which rows evidently are however oriented transversally to the advancement direction F, so as to reach the canalizing members 19 and the related outlet chutes 20 to be then deposited onto the section 9 of the reserve line 8. Accordingly the products P are rearranged and advanced towards the pile and store up area 11, and thus towards the reserve packaging station, according to the same parallel row configuration they were formerly arranged on the section 3 prior to being diverted through the transfer assembly 7.

As soon as proper operation of the line 2 (or of the related packaging station) is restored, the section 3 is again brought to its lowered position, following retraction of the respective outlet end 3c, and operation of the transfer assembly 7 is interrupted.

As previously pointed out, the transfer assembly 7 and the reserve line 8 according to the invention are capable to selectively operate with any one of the advancement lines 2, and the number of these lines and of the respective product canalizing elements may be different with respect to the example disclosed with reference to the drawings.

Naturally the details of construction and the embodiments may be widely varied with respect to what has been disclosed and illustrated, without thereby departing from the scope of the present invention, such as defined in the appended claims. Thus, for instance, the number of the advancement lines 2 could be greater and these lines may be mutually converging instead of being parallel. Moreover the reserve line may also consist, instead of an additional line, of the section 4 of one of the advancement lines 2 themselves, normally kept in a non-working condition and temporarily operated so as to act as a siding or connecting line with the one of the remaining advancement lines 2 subjected to failure.

Lastly, the transfer assembly 7 might be arranged at a lower instead of an upper level with respect to that of the advancement lines 2 and of the reserve or siding line 8. In that case, in order to transfer the products onto the carriage 12, the sections 3 of the advancement lines 2 would be angularly displaceable downwardly, instead of upwardly.

## Claims

1. A conveyor system (1) for baked foodstuff products (P), particularly for biscuits and the like, comprising a number of advancement lines (2) including side-by-side motor-driven endless conveyers (3a, 4a, 5a) on which the products arranged in a horizontally supported condition are continuously transferred into rows substantially parallel to the advancement direction (F) along respective canalizing elements (3b, 4b, 5b), towards pile and store up areas (11) for delivery of the products to respective packaging stations, characterized in that it comprises a reserve line (8) consisting of a motor-driven endless conveyer (9a, 10a) and transfer means (7) to selectively and temporarily divert the flow path of products (P) from any of said advancement lines (2) towards said reserve line (8).

2. Conveyor system according to claim 1, characterized in that said transfer means (7) comprise a carriage (12) displaceable in transverse direction with respect to the advancement lines (2) to be positioned in correspondence of a selected advancement line, a transverse motor-driven conveyer (14) arranged parallely to the displacement direction of the carriage (12), in proximity thereto, and connecting means arranged between said selected advancement line (2) and said carriage (12), between said carriage (12) and said transverse conveyer (14), and between said transverse conveyer (14) and said reserve line (8) to restore thereon the rows of products (P) transferred from the selected advancement line (2).

3. Conveyor system according to claim 2, characterized in that:
- said carriage (12) and said transverse conveyer (14) are arranged at a different level with respect to the level of said advancement lines (2) and said reserve line (8), upstream of said pile and store up areas,
- each advancement line (2) has a respective section (3) angularly displaceable between a substantially horizontal position and an inclined position, in which a respective outlet end (3c) thereof is located substantially at the same level of said carriage (12),
- the carriage (12) can be positioned between the outlet end (3c) of said displaceable section (3) and said transverse conveyer (14) and has canalizing members (17) corresponding to canalizing elements (3b) of said angularly displaceable section (3) and to each of which a respective motor-driven endless conveyor (24) is associated,
- the canalizing members (17) of the carriage (12) are provided, on the side of the transverse conveyer (14), with curved ends defining progressively offset connecting chutes (18) with said transverse conveyer (14),
- between the outlet end (14a) of the transverse conveyer (14) and the reserve line (8) canalizing members (19) corresponding to the canalizing members (17) of the carriage are provided which have, on the side of said reserve line (8), curved ends defining progressively offset connecting chutes (20) with said reserve line (8).

4. Conveyor system according to claim 3, characterized in that said outlet ends (3c) of said angularly displaceable sections (3) of the advancement lines (2) are retractable, and in that a transverse collecting conveyer (21) is provided beneath said outlet ends (3c).

5. Conveyor system according to claim 1, characterized in that said reserve line (8) consists of an additional line placed on one side of said advancement lines (2).

6. Conveyor system according to claim 1, characterized in that said reserve line (8) consists of one of said advancement lines (2), normally non operated.
